# EUROPEAN PATENT APPLICATION

(11) **EP 4 727 037 A1**
(43) Date of publication of application: **15.04.2026**
(21) Application number: 24838442.2
(22) Date of filing: 17.05.2024
(51) Int. Cl.: H04B 10/25, H04B 10/524

(54) **OPTICAL COMMUNICATION METHOD AND COMMUNICATION APPARATUS**

(30) Priority: 10.07.2023 CN 202310842091
(71) Applicant: Huawei Technologies Co., Ltd., Shenzhen, Guangdong 518129 (CN)
(72) Inventor: WU, Yangbo, Shenzhen, Guangdong 518129 (CN); TAN, Bowen, Shenzhen, Guangdong 518129 (CN); LV, Gen, Shenzhen, Guangdong 518129 (CN); LI, Jinbo, Shenzhen, Guangdong 518129 (CN); FENG, Jia, Shenzhen, Guangdong 518129 (CN); REN, Yang, Shenzhen, Guangdong 518129 (CN); TU, Zhengrui, Shenzhen, Guangdong 518129 (CN)
(74) Representative: Gill Jennings & Every LLP
(86) International application number: PCT/CN2024/093882
(87) International publication number: WO 2025/011183

(57) **Abstract**

This application provides an optical communication method and a communication apparatus. The method provides a solution that can reduce impact of multipath interference (multipath interference, MPI) in an optical fiber system on a transmitted signal in a low-cost manner. The method includes: A sending device sends, to a receiving device, a transmitted signal generated by the sending device based on pulse amplitude modulation-N, where strength distribution of the transmitted signal includes N strength values, the N strength values correspond to N-1 strength differences, a strength difference corresponding to a high strength value in the N strength values is greater than a strength difference corresponding to a low strength value, and the transmitted signal may be an optical signal, or may be an electrical signal. A strength distribution rule of the transmitted signal is changed, so that the strength difference corresponding to the high strength value is greater than the strength difference corresponding to the low strength value. This can effectively improve tolerance of the transmitted signal to MPI noise, and further reduce impact of the MPI in the optical fiber system on the transmitted signal in a low-cost manner.

## Description

This application claims priority to Chinese Patent Application No. 202310842091.2, filed with the China National Intellectual Property Administration on July 10, 2023 and entitled "OPTICAL COMMUNICATION METHOD AND COMMUNICATION APPARATUS", which is incorporated herein by reference in its entirety.

### TECHNICAL FIELD

This application relates to the field of communication technologies, and more specifically, to an optical communication method and a communication apparatus.

### BACKGROUND

Multipath interference (multipath interference, MPI) has negative impact on an optical signal transmitted in an optical fiber system, degrading signal quality of the optical signal. The MPI in the optical fiber system mainly originates from a contaminated fiber end face in the optical fiber system. Specifically, at least one new transmission path is formed between any two contaminated fiber end faces in the optical fiber system. An optical signal transmitted via the transmission path is noise for a signal (directly transmitted and propagated) transmitted via a primary path, which reduces signal quality of the optical signal transmitted via the primary path.

To reduce impact of the MPI in the optical fiber system on the transmitted signal, currently, an optical time-domain reflectometer (optical time-domain reflectometer, OTDR) technology is mainly used to measure a position of a contaminated fiber end face, and manual cleaning is performed, to reduce impact of the MPI in the optical fiber system on the transmitted signal. However, the foregoing manner causes high labor costs. Therefore, how to reduce impact of the MPI in the optical fiber system on the transmitted signal in a low-cost manner is a technical problem to be urgently resolved currently.

### SUMMARY

This application provides an optical communication method and a communication apparatus, to reduce impact of MPI in an optical fiber system on a transmitted signal in a low-cost manner.

According to a first aspect, an optical communication method is provided, including: generating a first signal based on pulse amplitude modulation PAM-N, where strength distribution of the first signal includes N strength values, the N strength values correspond to N-1 strength differences, the N-1 strength differences include an i^{th} strength difference and a p^{th} strength difference, the i^{th} strength difference is a difference between an (i+1)^{th} strength value and an i^{th} strength value in the N strength values, the p^{th} strength difference is a difference between a (p+1)^{th} strength value and a p^{th} strength value in the N strength values, both i and p are positive integers less than or equal to N-1, i is less than p, N is a positive integer greater than 2, and the i^{th} strength difference is less than the p^{th} strength difference; and transmitting the first signal.

Specifically, the solution described in the first aspect may be performed by a sending device, or may be performed by a chip, an integrated circuit, or the like configured to perform a function of the sending device. This is not limited. The following uses the sending device as an example for description.

It may be understood that the first signal may be an optical signal, or may be an electrical signal. When the first signal is an optical signal, transmitting the first signal is: transmitting the optical signal. When the first signal is an electrical signal, transmitting the first signal is: sending an optical signal obtained based on the electrical signal.

A strength distribution rule of the first signal is changed, so that a strength difference corresponding to a high strength value in the strength distribution of the first signal is greater than a strength difference corresponding to a low strength value. This can effectively improve tolerance of the first signal to MPI noise, and further reduce impact of MPI in an optical fiber system on a transmitted signal in a low-cost manner.

In a possible implementation, the first signal is an electrical signal, and the method further includes: generating an optical signal based on the first signal; and transmitting the optical signal through an optical fiber link.

When the first signal is an electrical signal, the sending device converts, into an optical signal by using an electro-optic modulator, the electrical signal that meets the foregoing rule, and transmits the optical signal to a receiving device through the optical fiber link. In this way, tolerance of the optical signal obtained based on the electrical signal to MPI noise in the optical fiber system can be improved, and further, impact of the MPI in the optical fiber system on the transmitted signal can be reduced in a low-cost manner.

In a possible implementation, the first signal is an optical signal, and the transmitting the first signal includes: transmitting the first signal through an optical fiber link.

When the first signal is an optical signal, strength distribution of the optical signal meets the foregoing rule. This can improve the tolerance of the optical signal to MPI noise in the optical fiber system, and further reduce impact of the MPI in the optical fiber system on the transmitted signal in a low-cost manner.

In a possible implementation, the generating the first signal based on the PAM-N includes: generating an electrical signal based on the PAM-N, where level distribution of the electrical signal includes N level values, the N level values correspond to N-1 level differences, the N-1 level differences include an i^{th} level difference and a p^{th} level difference, the i^{th} level difference is a difference between an (i+1)^{th} level value and an i^{th} level value in the N level values, the p^{th} level difference is a difference between a (p+1)^{th} level value and a p^{th} level value in the N level values, and the i^{th} level difference is less than the p^{th} level difference; and generating the first signal based on the electrical signal, where each of the N strength values corresponds to each of the N level values, and each of the N-1 strength differences corresponds to each of the N-1 level differences.

After the sending device generates, based on the PAM-N, the electrical signal that meets the foregoing rule, the sending device may convert the electrical signal into an optical signal by using an electro-optic modulator (for example, a Mach-Zehnder modulator (Mach-Zehnder modulator, MZM)). Optical power value distribution of the optical signal also meets the foregoing rule. In this way, the tolerance of the optical signal to MPI noise in the optical fiber system can be improved.

In a possible implementation, the generating the first signal based on the PAM-N includes: generating an electrical signal based on the PAM-N, where level distribution of the electrical signal includes N level values, the N level values correspond to N-1 level differences, the N-1 level differences include an i^{th} level difference and a p^{th} level difference, the i^{th} level difference is a difference between an (i+1)^{th} level value and an i^{th} level value in the N level values, the p^{th} level difference is a difference between a (p+1)^{th} level value and a p^{th} level value in the N level values, and the i^{th} level difference is equal to the p^{th} level difference; and converting the electrical signal into the first signal via a Mach-Zehnder modulator in a non-linear modulation mode.

When level value distribution of the electrical signal does not meet the foregoing rule, the sending device may convert, by using the MZM in the non-linear modulation mode, the electrical signal into an optical signal having the foregoing distribution rule. Optical power value distribution of the optical signal meets the foregoing rule. In this way, the tolerance of the optical signal to MPI noise in the optical fiber system can be improved.

In a possible implementation, the N strength values correspond to N-1 strength thresholds, the N-1 strength thresholds include an i^{th} strength threshold and a p^{th} strength threshold, the i^{th} strength threshold is greater than the i^{th} strength value, the i^{th} strength threshold is less than the (i+1)^{th} strength value, the p^{th} strength threshold is greater than the p^{th} strength value, and the p^{th} strength threshold is less than the (p+1)^{th} strength value. The i^{th} strength difference is a sum of a difference between the (i+1)^{th} strength value and the i^{th} strength threshold and a difference between the i^{th} strength threshold and the i^{th} strength value. The p^{th} strength difference is a sum of a difference between the (p+1)^{th} strength value and the p^{th} strength threshold and a difference between the p^{th} strength threshold and the p^{th} strength value.

The N-1 strength thresholds are set, so that the receiving device can better distinguish the N strength values.

In a possible implementation, the difference between the (i+1)^{th} strength value and the i^{th} strength threshold is greater than the difference between the i^{th} strength threshold and the i^{th} strength value, and the (i+1)^{th} strength value is greater than the i^{th} strength value. The difference between the (p+1)^{th} strength value and the p^{th} strength threshold is greater than the difference between the p^{th} strength threshold and the p^{th} strength value, and the (p+1)^{th} strength value is greater than the p^{th} strength value.

A positive correlation between each strength value and a difference between the strength value and a corresponding strength threshold is established, so that distribution of the N strength values can meet the foregoing rule, to avoid erroneous determining of the strength value by the receiving device, and further improve the tolerance of the first signal to MPI noise. Specifically, the MPI in the optical fiber system introduces MPI noise into each strength value. A feature of the MPI noise is that a larger strength value indicates a larger MPI noise amplitude. Therefore, when a larger strength value indicates a larger strength difference corresponding to the strength value, after the MPI noise is superimposed, because there is a larger strength difference, the receiving device can avoid erroneous determining of two adjacent strength values. In this way, the tolerance of the first signal to the MPI noise can be improved.

In a possible implementation, a ratio of the difference between the (i+1)^{th} strength value and the i^{th} strength threshold to a square root of the (i+1)^{th} strength value is a first value, and a ratio of the difference between the i^{th} strength value and the i^{th} strength threshold to a square root of the i^{th} strength value is the first value; and a ratio of the difference between the (p+1)^{th} strength value and the p^{th} strength threshold to a square root of the (p+1)^{th} strength value is the first value, and a ratio of the difference between the p^{th} strength value and the p^{th} strength threshold to a square root of the p^{th} strength value is the first value.

A ratio of a difference between each strength value and a corresponding strength threshold to a square root of the strength value is constant, so that distribution of the N strength values can meet the foregoing rule, to avoid erroneous determining of the strength value by the receiving device.

Specifically, the MPI in the optical fiber system introduces MPI noise into each strength value. A feature of an MPI noise amplitude is that a larger strength value indicates larger MPI noise. Therefore, when a larger strength value indicates a larger strength difference corresponding to the strength value, after the MPI noise is superimposed, because there is a larger strength difference, the receiving device can avoid erroneous determining of two adjacent strength values. In this way, the tolerance of the first signal to the MPI noise can be improved.

According to a second aspect, an optical communication method is provided, including: receiving, through an optical fiber link, an optical signal sent by a sending device, where the optical signal is generated by the sending device based on PAM-N, optical power distribution of the optical signal includes N optical power values, the N optical power values correspond to N-1 optical power differences, the N-1 optical power differences include an i^{th} optical power difference and a p^{th} optical power difference, the i^{th} optical power difference is a difference between an (i+1)^{th} optical power value and an i^{th} optical power value in the N optical power values, the p^{th} optical power difference is a difference between a (p+1)^{th} optical power value and a p^{th} optical power value in the N optical power values, both i and p are positive integers less than or equal to N-1, i is less than p, N is a positive integer greater than 2, and the i^{th} optical power difference is less than the p^{th} optical power difference; and processing the optical signal.

The technical solution in the second aspect may be performed by a receiving device, or may be performed by a chip, an integrated circuit, or the like configured to perform a function of the receiving device. This is not limited. The following uses the sending device as an example for description.

In a possible implementation, the processing the optical signal includes: determining N-1 optical power thresholds corresponding to the N optical power values, where the N-1 optical power thresholds include an i^{th} optical power threshold and a p^{th} optical power threshold, the i^{th} optical power threshold is greater than the i^{th} optical power value, the i^{th} optical power threshold is less than the (i+1)^{th} optical power value, the p^{th} optical power threshold is greater than the p^{th} optical power value, and the p^{th} optical power threshold is less than a (p+1)^{th} optical power value; the i^{th} optical power difference is a sum of a difference between the (i+1)^{th} optical power value and the i^{th} optical power threshold and a difference between the i^{th} optical power threshold and the i^{th} optical power value; and the p^{th} optical power difference is a sum of a difference between the (p+1)^{th} optical power value and the p^{th} optical power threshold and a difference between the p^{th} optical power threshold and the p^{th} optical power value; and processing the optical signal based on the N-1 optical power thresholds.

In a possible implementation, the difference between the (i+1)^{th} optical power value and the i^{th} optical power threshold is greater than the difference between the i^{th} optical power threshold and the i^{th} optical power value, and the (i+1)^{th} optical power value is greater than the i^{th} optical power value. The difference between the (p+1)^{th} optical power value and the p^{th} optical power threshold is greater than the difference between the p^{th} optical power threshold and the p^{th} optical power value, and the (p+1)^{th} optical power value is greater than the p^{th} optical power value.

In a possible implementation, a ratio of the difference between the (i+1)^{th} optical power value and an i^{th} optical power threshold to a square root of the (i+1)^{th} optical power value is a first value, and a ratio of the difference between the i^{th} optical power value and the i^{th} optical power threshold to a square root of the i^{th} optical power value is the first value; and a ratio of the difference between the (p+1)^{th} optical power value and the p^{th} optical power threshold to a square root of the (p+1)^{th} optical power value is the first value, and a ratio of the difference between the p^{th} optical power value and the p^{th} optical power threshold to a square root of the p^{th} optical power value is the first value.

According to a third aspect, a communication apparatus is provided. The communication apparatus may be a sending device, or may be an apparatus (for example, a chip, a chip system, or a circuit) in the sending device, or an apparatus that can be used in cooperation with the sending device.

In a possible implementation, the communication apparatus includes modules or units that are in one-to-one correspondence with the methods/operations/steps/actions described in any one of the first aspect. The module or the unit may be implemented by a hardware circuit, software, or a combination of a hardware circuit and software.

According to a fourth aspect, a communication apparatus is provided. The communication apparatus may be a receiving device, or may be an apparatus (for example, a chip, a chip system, or a circuit) in the receiving device, or an apparatus that can be used in cooperation with the receiving device.

In a possible implementation, the communication apparatus may include modules or units that are in one-to-one correspondence with the method/operations/steps/actions described in the second aspect. The module or unit may be implemented by a hardware circuit, software, or a combination of a hardware circuit and software.

According to a fifth aspect, a communication apparatus is provided, including a processor. The processor is configured to cause, by executing a computer program or instructions or via a logic circuit, the communication apparatus to perform the method according to any one of the first aspect and the possible implementations of the first aspect, or the communication apparatus to perform the method according to any one of the second aspect and the possible implementations of the second aspect.

In a possible implementation, the communication apparatus further includes a memory, configured to store the computer program or the instructions.

In a possible implementation, the communication apparatus further includes a communication interface, configured to input a signal and/or output a signal.

According to a sixth aspect, a communication apparatus is provided. The communication apparatus includes a logic circuit and an input/output interface. The input/output interface is configured to input a signal and/or output a signal. The logic circuit is configured to perform the method according to any one of the first aspect and the possible implementations of the first aspect; or the logic circuit is configured to perform the method according to any one of the second aspect and the possible implementations of the second aspect.

According to a seventh aspect, a computer-readable storage medium is provided. The computer-readable storage medium stores a computer program or instructions. When the computer program or the instructions are run on a computer, the method according to any one of the first aspect and the possible implementations of the first aspect is performed, or the method according to any one of the second aspect and the possible implementations of the second aspect is performed.

According to an eighth aspect, a computer program product is provided. The computer program product includes instructions. When the instructions are run on a computer, the method according to any one of the first aspect and the possible implementations of the first aspect is performed, or the method according to any one of the second aspect and the possible implementations of the second aspect is performed.

Descriptions of beneficial effects of the second aspect to the eighth aspect may correspond to descriptions of beneficial effects of the first aspect.

### BRIEF DESCRIPTION OF DRAWINGS

FIG. 1 is a diagram of impact of MPI in an optical fiber system on a transmitted signal;
FIG. 2 is a schematic flowchart of interaction of an optical communication method according to an embodiment of this application;
FIG. 3 is a diagram of strength distribution of a signal 1 according to an embodiment of this application;
FIG. 4 is a diagram of a relationship between a modulation mode of an MZM and an electrical signal 1 according to an embodiment of this application;
FIG. 5 is a block diagram of a communication apparatus 500 according to an embodiment of this application; and
FIG. 6 is a block diagram of a communication apparatus 600 according to an embodiment of this application.

### DESCRIPTION OF EMBODIMENTS

For ease of understanding embodiments of this application, the following points are first described.
1. In this application, unless otherwise specified, "a plurality of' means two or more.
2. In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.
3. Various numbers in this application are merely used for differentiation for ease of description, but are not intended to limit the protection scope of this application. Sequence numbers in this application do not mean an execution sequence, and the execution sequence of processes should be determined based on functions and internal logic of the processes. For example, in this specification, the claims, and the accompanying drawings of this application, the terms "first", "second", "third", "fourth", and various other number terms (if existent) are used for distinguishing between similar objects, but do not necessarily indicate a specific order or sequence. Data termed in such a way is interchangeable in appropriate circumstances so that embodiments described herein can be implemented in other orders than the order illustrated or described herein.
   In addition, any embodiment or design scheme described as an "example" or "for example" in this application should not be explained as being more preferred or having more advantages than another embodiment or design scheme. Exactly, use of the terms such as "example" or "for example" is intended to present a related concept in a specific manner for ease of understanding.
4. The terms "include", "have", and variants thereof are intended to cover a non-exclusive inclusion. For example, a process, a method, a system, a product, or a device that includes a series of steps or units is not necessarily limited to those expressly listed steps or units, but may include other steps or units not expressly listed or inherent to such a process, method, product, or device.
5. The term "storage" or "store" in this application may mean "being stored" in one or more memories. The one or more memories may be separately disposed, or may be integrated into an encoder or a decoder, a processor, or a communication apparatus. Alternatively, a part of the one or more memories may be separately disposed, and a part of the one or more memories are integrated into the translator, the processor, or the communication apparatus. A type of the memory may be a storage medium in any form. This is not limited.
6. Arrows or blocks shown by dashed lines in the diagrams of the accompanying drawings in the specification of this application represent optional steps or optional modules.
7. In this application, unless otherwise specified, "/" represents an "or" relationship between associated objects. For example, A/B may represent A or B. "And/or" in this application describes only an association relationship for describing associated objects and represents that three relationships may exist. For example, A and/or B may represent the following three cases: Only A exists, both A and B exist, and only B exists, where A and B may be singular or plural.

First, the terms in embodiments of this application are briefly described.

### 1. Pulse amplitude modulation (pulse amplitude modulation, PAM)-4

The PAM-4 is a modulation technology in which four levels are used for signal transmission. Each symbol period of a PAM-4 signal may represent 2-bit logical information (for example, 00, 01, 10, and 11).

In comparison with a non-return-to-zero (non-return-to-zero, NRZ) modulation technology, the PAM-4 signal has a transmission capability twice that of an NRZ signal, and can significantly improve signal transmission efficiency.

### 2. MPI in an optical fiber system

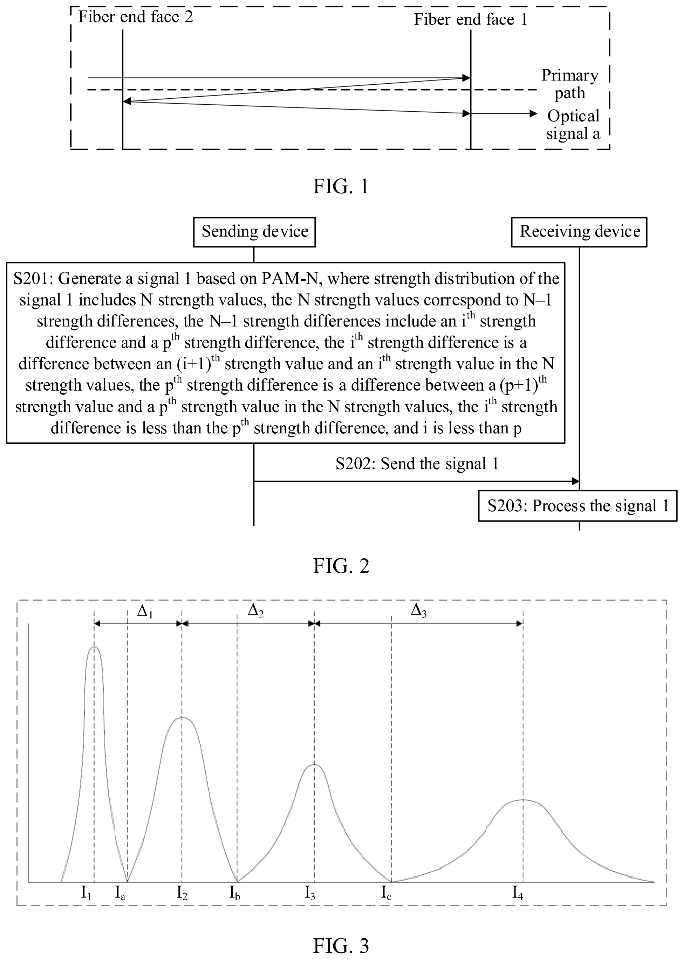

With the continuous development of communication technologies, a large quantity of optical fiber connectors need to be used in the optical fiber system to connect optical fiber cables, so as to perform long-distance transmission of optical signals. Over time, a fiber end face of the optical fiber connector is inevitably contaminated by a contaminant. At least one new transmission path is formed between any two contaminated fiber end faces. As a quantity of contaminated fiber end faces increases, a large quantity of new transmission paths are formed in the optical fiber system. An optical signal transmitted via the new transmission path is noise for an optical signal (directly transmitted without reflection) transmitted via a primary path, and affects signal quality of the optical signal. For impact of the MPI in the optical fiber system on a transmitted signal, refer to FIG. 1.

FIG. 1 is a diagram of impact of MPI in an optical fiber system on a transmitted signal. As shown in FIG. 1, a fiber end face 1 and a fiber end face 2 are contaminated fiber end faces. After an optical signal a is transmitted to the fiber end face 1, the optical signal a cannot directly pass through the fiber end face 1, but is reflected by the fiber end face 1 to the fiber end face 2, is then reflected by the fiber end face 2, and finally passes through the fiber end face 1 for transmission. It can be learned from the foregoing descriptions that the optical signal a can be transmitted through the end face 1 only after the two reflections by the fiber end face 1 and the fiber end face 2. A larger quantity of contaminated fiber end faces in the optical fiber system indicates more additional transmission paths (that is, new transmission paths) for an optical signal, and consequently, signal quality of an optical signal transmitted via a primary path deteriorates.

Because a PAM-4 signal has higher transmission efficiency, a PAM-4 modulation technology is also used for the optical signal. Because the PAM-4 signal is sensitive to noise, the MPI in the optical fiber system needs to be controlled, so that interference caused by the MPI on the PAM-4 signal can be reduced.

As described in the background, currently, an OTDR technology is mainly used to measure a position of a contaminated fiber end face, and the contaminated fiber end face is manually cleaned, so as to reduce the MPI in the optical fiber system. However, the foregoing manner causes high labor costs. Therefore, there is a need for a method that can reduce impact of the MPI in the optical fiber system on the transmitted signal in a low-cost manner.

In view of this, this application provides an optical communication method and a communication apparatus, to reduce impact of MPI in an optical fiber system on a transmitted signal in a low-cost manner.

The following describes the optical communication method in embodiments of this application with reference to accompanying drawings.

FIG. 2 is a schematic flowchart of interaction of an optical communication method according to an embodiment of this application. The method in FIG. 2 may be performed by a sending device and a receiving device, or may be performed by modules and/or components (for example, chips or integrated circuits) that are installed in the sending device and the receiving device and that have corresponding functions. This is not limited. The following uses the sending device and the receiving device as examples for description. As shown in FIG. 2, the method includes the following steps.

S201: The sending device generates a signal 1 based on PAM-N, where strength distribution of the signal 1 includes N strength values, the N strength values correspond to N-1 strength differences, the N-1 strength differences include an i^{th} strength difference and a p^{th} strength difference, the i^{th} strength difference is a difference between an (i+1)^{th} strength value and an i^{th} strength value in the N strength values, the p^{th} strength difference is a difference between a (p+1)^{th} strength value and a p^{th} strength value in the N strength values, i is less than p, and the i^{th} strength difference is less than the p^{th} strength difference.

Specifically, N is a positive integer greater than 2, and both i and p are positive integers less than or equal to N. For example, N may be 3, 4, or 8. When N is 3, the sending device generates the signal 1 based on PAM-3, where the strength distribution of the signal 1 includes three strength values, and both i and p are positive integers less than or equal to 3; when N is 4, the sending device generates the signal 1 based on PAM-4, where the strength distribution of the signal 1 includes four strength values, and both i and p are positive integers less than or equal to 4; or when N is 8, the sending device generates the signal 1 based on PAM-8, where the strength distribution of the signal 1 includes eight strength values, and both i and p are positive integers less than or equal to 8. For ease of description, the following uses an example in which N is 4. For descriptions of a relationship between a strength value and a strength difference, refer to FIG. 3.

FIG. 3 is a diagram of the strength distribution of the signal 1 according to an embodiment of this application. As shown in FIG. 3, N=4 is used as an example. The strength distribution of the signal 1 includes four strength values: I₁, I₂, I₃, and I₄, where I₁<I₂<I₃<I₄. The foregoing four strength values correspond to three strength differences: Δ1, Δ2, and Δ3. Δ1=I₂-I₁, Δ2=I₃-I₂, and Δ3=I₄-I₃. Δ1<Δ2<Δ3. Because Δ1<Δ2<Δ3, the foregoing four strength values are not evenly distributed. Specifically, an interval between I₁ and I₂ is less than an interval between I₂ and I₃, and the interval between I₂ and I₃ is less than an interval between I₃ and I₄.

Specifically, each strength value of the signal 1 is affected by specific MPI noise. An MPI noise amplitude is related to the strength value. For example, an MPI noise amplitude corresponding to a high strength value is greater than an MPI noise amplitude corresponding to a low strength value. The strength differences corresponding to the N strength values in the strength distribution of the signal 1 are different, so that tolerance of the signal 1 to MPI noise can be effectively improved.

Specifically, MPI in an optical fiber system introduces MPI noise into each strength value. A feature of the MPI noise is that a larger strength value indicates a larger MPI noise amplitude. For example, if the (i+1)^{th} strength value is greater than the i^{th} strength value, an MPI noise amplitude corresponding to the (i+1)^{th} strength value is also greater than an MPI noise amplitude corresponding to the i^{th} strength value. Because the strength difference between the (i+1)^{th} strength value and the i^{th} strength value is large, after the MPI noise is superimposed on both strength values, the receiving device may correctly determine the (i+1)^{th} strength value and the i^{th} strength value because of the large strength difference between the (i+1)^{th} strength value and the i^{th} strength value. In this way, the tolerance of the signal 1 to the MPI noise can be improved.

In the foregoing descriptions, in a possible implementation, the signal 1 may be an optical signal 1, or may be an electrical signal 1.

In an example, the signal 1 is an optical signal 1, and optical power value distribution of the optical signal 1 meets the foregoing rule, to be specific, the optical power distribution of the optical signal 1 includes N optical power values, the N optical power values correspond to N-1 optical power differences, an i^{th} optical power difference is a difference between an (i+1)^{th} optical power value and an i^{th} optical power value in the N optical power values, a p^{th} optical power difference is a difference between a (p+1)^{th} optical power value and a p^{th} optical power value in the N optical power values, and the i^{th} optical power difference is less than the p^{th} optical power difference. In this way, tolerance of the optical signal 1 to the MPI noise in the optical fiber system can be improved. The foregoing optical power value may be the foregoing strength value, and the foregoing optical power difference may be the foregoing strength difference.

In another example, the signal 1 is an electrical signal 1, and level value distribution of the electrical signal 1 meets the foregoing rule, to be specific, the level distribution of the electrical signal 1 includes N level values, the N level values correspond to N-1 level differences, an i^{th} level difference is a difference between an (i+1)^{th} level value and an i^{th} level value in the N level values, a p^{th} level difference is a difference between a (p+1)^{th} level value and a p^{th} level value in the N level values, and the i^{th} level difference is less than the p^{th} level difference. The level value may be the foregoing strength value, and the level difference may be the foregoing strength difference. The sending device may adjust the level values of the output electrical signal 1 by using a driving chip, so that the level values of the electrical signal 1 are distributed according to the foregoing rule.

Specifically, after the sending device generates, based on the PAM-N, the electrical signal 1 that meets the foregoing rule, the sending device converts the electrical signal 1 into an optical signal 1 by using an electro-optical converter (for example, an MZM), and optical power value distribution of the optical signal 1 obtained based on the electrical signal 1 also meets the foregoing rule. In this way, the tolerance of the optical signal 1 to the MPI noise in the optical fiber system can be improved.

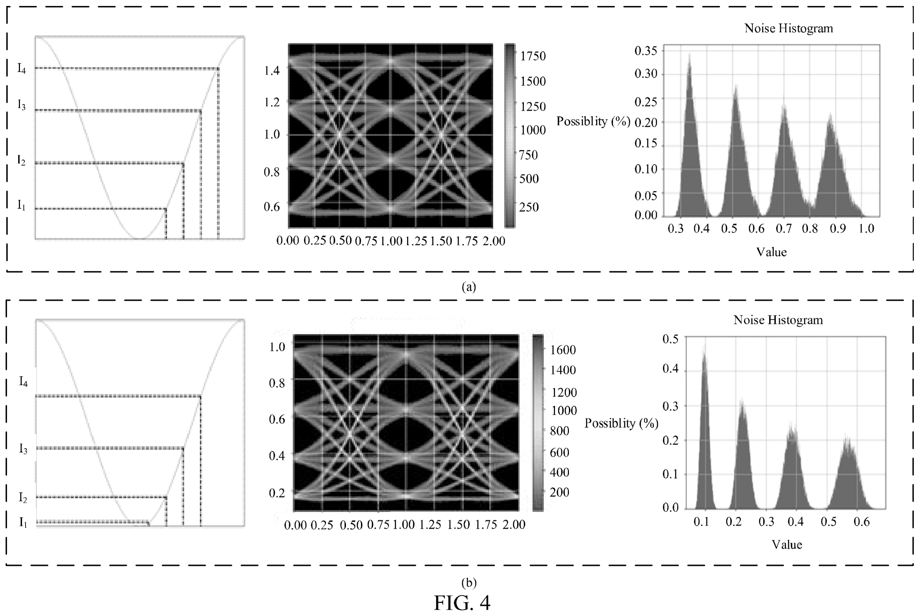

In a possible implementation, when the level distribution of the electrical signal 1 does not meet the foregoing rule, to be specific, the level distribution of the electrical signal 1 includes N level values, the N level values correspond to N-1 level differences, an i^{th} level difference is a difference between an (i+1)^{th} level value and an i^{th} level value in the N level values, a p^{th} level difference is a difference between a (p+1)^{th} level value and a p^{th} level value in the N level values, and the i^{th} level difference is equal to the p^{th} level difference. The sending device may set the MZM to a non-linear modulation mode, and convert the electrical signal 1 into an optical signal 1 by using the MZM in the non-linear modulation mode. Optical power distribution of the optical signal 1 obtained based on the electrical signal 1 may also meet the foregoing rule. In this way, the tolerance of the optical signal 1 to the MPI noise in the optical fiber system may be improved. For details, refer to FIG. 4.

FIG. 4 is a diagram of a relationship between a modulation mode of the MZM and the electrical signal 1 according to an embodiment of this application. As shown in (a) in FIG. 4, when a linear modulation mode of the MZM is used, it can be learned from a left figure that four level values of the electrical signal 1 are evenly distributed, it can be learned from a middle figure that eye widths of three eyes in an eye pattern corresponding to the electrical signal 1 are the same, and it can be learned from a right figure that, after the MPI noise is superimposed, an overlap occurs between a 3^{rd} optical power value and a 4^{th} optical power value that are in an optical signal 1 obtained based on the electrical signal 1, and the receiving device cannot accurately determine the 3^{rd} optical power value and the 4^{th} optical power value. As shown in (b) in FIG. 4, when the non-linear modulation mode of the MZM is used, it can be learned from a left figure that four level values are not evenly distributed, it can be learned from a middle figure that eye widths of three eyes in an eye pattern corresponding to the electrical signal 1 are different, and it can be learned from a right figure that, after the MPI noise is superimposed, no overlap occurs between a 3^{rd} optical power value and a 4^{th} optical power value that are in the optical signal 1 obtained based on the electrical signal 1, and the receiving device can accurately determine the 3^{rd} optical power value and the 4^{th} optical power value.

In conclusion, when the signal 1 is an optical signal 1, the tolerance of the optical signal 1 to the MPI noise in the optical fiber system can be improved in this application. When the signal 1 is an electrical signal 1, the tolerance of the optical signal 1, which is obtained through conversion based on the electrical signal 1, to the MPI noise in the optical fiber system can be improved in this application. After the tolerance of the optical signal 1 to the MPI noise is improved, this application supports a case in which a contaminated fiber end face does not need to be cleaned manually.

S202: The sending device transmits the signal 1.

When the signal 1 is an optical signal 1, the sending device sends the signal 1 to the receiving device through an optical fiber link. When the signal 1 is an electrical signal 1, the sending device first converts the electrical signal 1 into an optical signal 1 by using an electro-optic modulator, and sends the optical signal 1 to the receiving device through the optical fiber link.

S203: The receiving device processes the signal 1.

Specifically, the receiving device processes the signal 1, and obtains information in the signal 1.

In conclusion, a strength distribution rule of the signal 1 is changed, so that a strength difference corresponding to a high strength value in the N strength values of the signal 1 is greater than a strength difference corresponding to a low strength value in the N strength values. This can effectively improve the tolerance of the signal 1 to the MPI noise, and further reduce impact of the MPI in the optical fiber system on a transmitted signal in a low-cost manner.

Specifically, the MPI in the optical fiber system introduces the MPI noise into each strength value. A feature of the MPI noise amplitude is that a larger strength value indicates larger MPI noise. Therefore, when a larger strength value indicates a larger strength difference corresponding to the strength value, after the MPI noise is superimposed, because there is a larger strength difference, the receiving device can avoid erroneous determining of two adjacent strength values. In this way, the tolerance of the signal 1 to the MPI noise can be improved. After the tolerance of the signal 1 to the MPI noise is improved, this application supports the case in which a contaminated fiber end face does not need to be cleaned manually.

In an embodiment, the N strength values correspond to N-1 strength thresholds, the N-1 strength thresholds include an i^{th} strength threshold and a p^{th} strength threshold, the i^{th} strength threshold is greater than the i^{th} strength value, the i^{th} strength threshold is less than the (i+1)^{th} strength value, the p^{th} strength threshold is greater than the p^{th} strength value, and the p^{th} strength threshold is less than the (p+1)^{th} strength value. The i^{th} strength difference is a sum of a difference between the (i+1)^{th} strength value and the i^{th} strength threshold and a difference between the i^{th} strength threshold and the i^{th} strength value. The p^{th} strength difference is a sum of a difference between the (p+1)^{th} strength value and the p^{th} strength threshold and a difference between the p^{th} strength threshold and the p^{th} strength value.

For example, it can be learned from FIG. 3 that there is a strength threshold Iₐ between I₁ and I₂, there is a strength threshold I_{b} between I₂ and I₃, and there is a strength threshold I_{c} between I₃ and I₄. Δ1=(I₂-Iₐ)+(Iₐ-I₁), Δ2=(I₃-I_{b})+(I_{b}-I₂), and Δ3=(I₄-I_{c})+(I_{c}-I₃).

Specifically, the N-1 strength thresholds are set, so that the receiving device can better distinguish the N strength values.

It should be noted that the sending device and the receiving device may communicate the N-1 strength thresholds. This helps the receiving device better determine each strength value. Alternatively, the N-1 strength thresholds may be preconfigured in the receiving device, so that signaling overheads between the sending device and the receiving device can be reduced.

In an embodiment, the difference between the (i+1)^{th} strength value and the i^{th} strength threshold is greater than the difference between the i^{th} strength threshold and the i^{th} strength value, and the (i+1)^{th} strength value is greater than the i^{th} strength value. The difference between the (p+1)^{th} strength value and the p^{th} strength threshold is greater than the difference between the p^{th} strength threshold and the p^{th} strength value, and the (p+1)^{th} strength value is greater than the p^{th} strength value.

For example, it can be learned from FIG. 3 that I₂ is greater than I₁, and (I₂-Iₐ) is greater than (Iₐ-I₁); I₃ is greater than I₂, and (I₃-I_{b}) is greater than (I_{b}-I₂); and I₄ is greater than I₃, and (I₄-I_{c}) is greater than (I_{c}-I₃). (I₂-Iₐ)=(I_{b}-I₂), and (I₃-I_{b})=(I_{c}-I₃).

Specifically, a positive correlation between each strength value and a difference between the strength value and a corresponding strength threshold is established, so that distribution of the N strength values can meet the foregoing rule, to avoid erroneous determining of the strength value by the receiving device. Specifically, the MPI in the optical fiber system introduces the MPI noise into each strength value. The feature of the MPI noise is that a larger strength value indicates a larger MPI noise amplitude. Therefore, a larger value of the (i+1)^{th} strength value indicates a larger strength difference corresponding to the (i+1)^{th} strength value. After the MPI noise is superimposed, because there is a larger strength difference, the receiving device can avoid erroneous determining of the i^{th} strength value and the (i+1)^{th} strength value. In this way, the tolerance of the first signal to the MPI noise can be improved.

Specifically, I₂ is greater than I₁, and (I₂-Iₐ) is greater than (Iₐ-I₁). After the MPI noise is superimposed, the receiving device may accurately determine I₂ and I₁. I₃ is greater than I₂, and (I₃-I_{b}) is greater than (I_{b}-I₂). After the MPI noise is superimposed, the receiving device may accurately determine I₃ and I₂. I₄ is greater than I₃, and (I₄-I_{c}) is greater than (I_{c}-I₃). After the MPI noise is superimposed, the receiving device may accurately determine I₄ and I₃.

In an embodiment, a ratio of the difference between the (i+1)^{th} strength value and the i^{th} strength threshold to a square root of the (i+1)^{th} strength value is a first value, and a ratio of the difference between the i^{th} strength value and the i^{th} strength threshold to a square root of the i^{th} strength value is the first value; and a ratio of the difference between the (p+1)^{th} strength value and the p^{th} strength threshold to a square root of the (p+1)^{th} strength value is the first value, and a ratio of the difference between the p^{th} strength value and the p^{th} strength threshold to a square root of the p^{th} strength value is the first value.

For example, it can be learned from FIG. 3 that (Iₐ-I₁)/I₁=(I₂-Iₐ)/I₂=(I₃-I_{b})/I₃=(I_{b}-I₂)/I₂=(I₄-I_{c})/I₃=(I_{c}-I₃)/I₃=k (which is the first value), where k is a constant.

Specifically, a ratio of a difference between each strength value and a corresponding strength threshold to a square root of the strength value is constant, so that distribution of the N strength values can meet the foregoing rule, to avoid erroneous determining of the strength value by the receiving device.

Specifically, the MPI in the optical fiber system introduces the MPI noise into each strength value. The feature of the MPI noise amplitude is that a larger strength value indicates larger MPI noise. Therefore, when a larger strength value indicates a larger strength difference corresponding to the strength value, after the MPI noise is superimposed, because there is a larger strength difference, the receiving device can avoid erroneous determining of two adjacent strength values. In this way, the tolerance of the first signal to the MPI noise can be improved.

In conclusion, in this application, the strength distribution rule of the signal 1 is changed, so that the strength difference corresponding to the high strength value is greater than the strength difference corresponding to the low strength value. In this way, after the MPI noise is superimposed on each strength value, because there is a large strength difference, the receiving device can more accurately determine the strength value. Correspondingly, after the tolerance of the signal 1 to the MPI noise is improved, this application supports the case in which a contaminated fiber end face does not need to be manually cleaned, to reduce costs.

The foregoing describes the method embodiments in embodiments of this application, and the following describes corresponding apparatus embodiments.

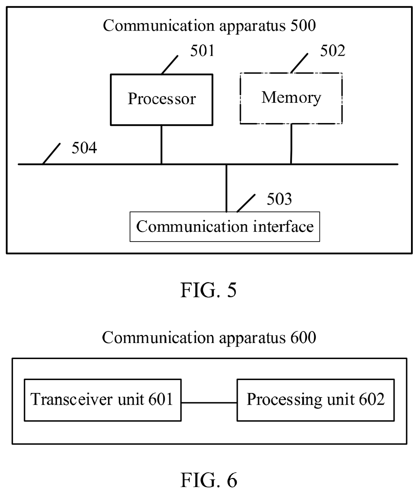

FIG. 5 is a block diagram of a communication apparatus 500 according to an embodiment of this application. The communication apparatus 500 includes a processor 501, a memory 502 (optional), and a communication interface 503. The processor 501, the memory 502, and the communication interface 503 are connected to each other through a bus 504. The communication apparatus 500 may be a sending device, or may be a receiving device.

Specifically, the memory 502 includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 502 is configured to store related instructions and data.

The processor 501 may be one or more central processing units (central processing units, CPUs). When the processor 501 is one CPU, the CPU may be a single-core CPU or a multicore CPU.

For example, when the communication apparatus 500 is a sending device, the processor 501 is configured to read program code stored in the memory 502, to perform the following operations: generating a signal 1 based on PAM-N; and sending the signal 1.

For example, when the communication apparatus 500 is a receiving device, the processor 501 is configured to read program code stored in the memory 502, to perform the following operations: receiving an optical signal 1; and processing the optical signal 1.

It should be noted that, for implementations of various operations in FIG. 5, refer to corresponding descriptions in the method embodiments shown in FIG. 2 to FIG. 4.

FIG. 6 is a block diagram of a communication apparatus 600 according to an embodiment of this application. The communication apparatus 600 is used in a sending device, or may be used in a receiving device, and may be configured to implement the method in the foregoing method embodiments. The communication apparatus 600 includes a transceiver unit 601 and a processing unit 602. The following describes the transceiver unit 601 and the processing unit 602.

For example, when the communication apparatus 600 is a sending device, the processing unit 602 is configured to generate a signal 1 based on PAM-N, and the transceiver unit 601 is configured to send an optical signal 1 to a receiving device.

For example, when the communication apparatus 600 is a receiving device, the transceiver unit 601 is configured to receive an optical signal 1, and the processing unit 702 is configured to process the optical signal 1.

It should be noted that, for implementations of various operations in FIG. 6, refer to corresponding descriptions of the method shown in the foregoing embodiments. This is merely an example for understanding herein.

An embodiment of this application further provides a chip, including a processor, configured to invoke, from a memory, instructions stored in the memory and run the instructions, to cause a communication device on which the chip is mounted to perform the method in the foregoing examples.

An embodiment of this application further provides another chip, including an input interface, an output interface, a processor, and a memory. The input interface, the output interface, the processor, and the memory are connected through an internal connection path. The processor is configured to execute code in the memory. When the code is executed, the processor is configured to perform the methods in the foregoing examples.

An embodiment of this application further provides a processor, configured to be coupled to a memory, and configured to perform a method and a function that are related to a satellite or user equipment in any one of the foregoing embodiments.

In another embodiment of this application, a computer program product is provided. When the computer program product runs on a computer, the method in the foregoing embodiment is implemented.

In another embodiment of this application, a computer-readable storage medium is provided. The computer-readable storage medium stores a computer program. When the computer program is executed by a computer, the method in the foregoing embodiment is implemented.

In the descriptions of embodiments of this application, the term "a plurality of" means two or more than two unless otherwise specified. "At least one of the following items (pieces)" or a similar expression thereof refers to any combination of these items, including a single item (piece) or any combination of a plurality of items (pieces). For example, at least one item (piece) of a, b, or c may represent: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" are not intended to limit a quantity or an execution sequence, and the terms such as "first" and "second" do not indicate a definite difference. In addition, in embodiments of this application, the expression such as "example" or "for example" is used to represent giving an example, an illustration, or description.

Any embodiment or design scheme described as an "example" or "for example" in embodiments of this application should not be explained as being more preferred or having more advantages than another embodiment or design scheme. Exactly, use of the term such as "example" or "for example" is intended to present a related concept in a specific manner for ease of understanding.

Unless otherwise specified, "/" in the descriptions of embodiments of this application represents an "or" relationship between associated objects. For example, A/B may represent A or B. "And/or" in this application describes only an association relationship for describing associated objects and represents that three relationships may exist. For example, A and/or B may represent the following three cases: Only A exists, both A and B exist, and only B exists, where A and B may be singular or plural.

It should be understood that "one embodiment" or "an embodiment" mentioned throughout this specification means that specific features, structures, or characteristics related to this embodiment are included in at least one embodiment of the present invention.

Therefore, "in one embodiment" or "in an embodiment" appearing throughout the specification does not necessarily refer to a same embodiment. In addition, these particular features, structures, or characteristics may be combined in one or more embodiments by using any appropriate manner. Sequence numbers of the foregoing processes do not mean execution sequences in various embodiments of the present invention. The execution sequences of the processes should be determined based on functions and internal logic of the processes, and should not be construed as any limitation on implementation processes of embodiments of the present invention.

It may be understood that an "embodiment" used throughout this specification means that specific features, structures, or characteristics related to this embodiment are included in at least one embodiment of this application.

Therefore, embodiments in the entire specification are not necessarily a same embodiment. In addition, these particular features, structures, or characteristics may be combined in one or more embodiments by using any appropriate manner. It may be understood that sequence numbers of processes do not mean execution sequences in various embodiments of this application. The execution sequences of the processes should be determined based on functions and internal logic of the processes, and should not be construed as any limitation on implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again. In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed.

In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments. In addition, functional units in embodiments of this application may be integrated into one processing unit, or each of the units may exist alone physically, or two or more units may be integrated into one unit.

When functions are implemented in the form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for indicating a computer device (which may be a personal computer, a server, or a network device) to perform all or a part of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An optical communication method, comprising:
generating a first signal based on pulse amplitude modulation PAM-N, wherein strength distribution of the first signal comprises N strength values, the N strength values correspond to N-1 strength differences, the N-1 strength differences comprise an i^{th} strength difference and a p^{th} strength difference, the i^{th} strength difference is a difference between an (i+1)^{th} strength value and an i^{th} strength value in the N strength values, the p^{th} strength difference is a difference between a (p+1)^{th} strength value and a p^{th} strength value in the N strength values, both i and p are positive integers less than or equal to N-1, i is less than p, N is a positive integer greater than 2, and the i^{th} strength difference is less than the p^{th} strength difference; and
transmitting the first signal.

2. The method according to claim 1, wherein the first signal is an electrical signal, and the method further comprises:
generating an optical signal based on the first signal; and
transmitting the optical signal through an optical fiber link.

3. The method according to claim 1, wherein the first signal is an optical signal, and the transmitting the first signal comprises:
transmitting the first signal through an optical fiber link.

4. The method according to claim 3, wherein the generating the first signal based on the PAM-N comprises:
generating an electrical signal based on the PAM-N, wherein level distribution of the electrical signal comprises N level values, the N level values correspond to N-1 level differences, the N-1 level differences comprise an i^{th} level difference and a p^{th} level difference, the i^{th} level difference is a difference between an (i+1)^{th} level value and an i^{th} level value in the N level values, the p^{th} level difference is a difference between a (p+1)^{th} level value and a p^{th} level value in the N level values, and the i^{th} level difference is less than the p^{th} level difference; and
generating the first signal based on the electrical signal, wherein
each of the N strength values corresponds to each of the N level values, and each of the N-1 strength differences corresponds to each of the N-1 level differences.

5. The method according to claim 3, wherein the generating the first signal based on the PAM-N comprises:
generating an electrical signal based on the PAM-N, wherein level distribution of the electrical signal comprises N level values, the N level values correspond to N-1 level differences, the N-1 level differences comprise an i^{th} level difference and a p^{th} level difference, the i^{th} level difference is a difference between an (i+1)^{th} level value and an i^{th} level value in the N level values, the p^{th} level difference is a difference between a (p+1)^{th} level value and a p^{th} level value in the N level values, and the i^{th} level difference is equal to the p^{th} level difference; and
converting the electrical signal into the first signal via a Mach-Zehnder modulator in a non-linear modulation mode.

6. The method according to any one of claims 1 to 5, wherein the N strength values correspond to N-1 strength thresholds, the N-1 strength thresholds comprise an i^{th} strength threshold and a p^{th} strength threshold, the i^{th} strength threshold is greater than the i^{th} strength value, the i^{th} strength threshold is less than the (i+1)^{th} strength value, the p^{th} strength threshold is greater than the p^{th} strength value, and the p^{th} strength threshold is less than the (p+1)^{th} strength value;
the i^{th} strength difference is a sum of a difference between the (i+1)^{th} strength value and the i^{th} strength threshold and a difference between the i^{th} strength threshold and the i^{th} strength value; and
the p^{th} strength difference is a sum of a difference between the (p+1)^{th} strength value and the p^{th} strength threshold and a difference between the p^{th} strength threshold and the p^{th} strength value.

7. The method according to claim 6, wherein
the difference between the (i+1)^{th} strength value and the i^{th} strength threshold is greater than the difference between the i^{th} strength threshold and the i^{th} strength value, and the (i+1)^{th} strength value is greater than the i^{th} strength value; and
the difference between the (p+1)^{th} strength value and the p^{th} strength threshold is greater than the difference between the p^{th} strength threshold and the p^{th} strength value, and the (p+1)^{th} strength value is greater than the p^{th} strength value.

8. The method according to claim 6 or 7, wherein
a ratio of the difference between the (i+1)^{th} strength value and the i^{th} strength threshold to a square root of the (i+1)^{th} strength value is a first value, and a ratio of the difference between the i^{th} strength value and the i^{th} strength threshold to a square root of the i^{th} strength value is the first value; and
a ratio of the difference between the (p+1)^{th} strength value and the p^{th} strength threshold to a square root of the (p+1)^{th} strength value is the first value, and a ratio of the difference between the p^{th} strength value and the p^{th} strength threshold to a square root of the p^{th} strength value is the first value.

9. An optical communication method, comprising:
receiving, through an optical fiber link, an optical signal sent by a sending device, wherein the optical signal is generated by the sending device based on PAM-N, optical power distribution of the optical signal comprises N optical power values, the N optical power values correspond to N-1 optical power differences, the N-1 optical power differences comprise an i^{th} optical power difference and a p^{th} optical power difference, the i^{th} optical power difference is a difference between an (i+1)^{th} optical power value and an i^{th} optical power value in the N optical power values, the p^{th} optical power difference is a difference between a (p+1)^{th} optical power value and a p^{th} optical power value in the N optical power values, both i and p are positive integers less than or equal to N-1, i is less than p, N is a positive integer greater than 2, and the i^{th} optical power difference is less than the p^{th} optical power difference; and
processing the optical signal.

10. The method according to claim 9, wherein the processing the optical signal comprises:
determining N-1 optical power thresholds corresponding to the N optical power values, wherein the N-1 optical power thresholds comprise an i^{th} optical power threshold and a p^{th} optical power threshold, the i^{th} optical power threshold is greater than the i^{th} optical power value, the i^{th} optical power threshold is less than the (i+1)^{th} optical power value, the p^{th} optical power threshold is greater than the p^{th} optical power value, and the p^{th} optical power threshold is less than the (p+1)^{th} optical power value;
the i^{th} optical power difference is a sum of a difference between the (i+1)^{th} optical power value and the i^{th} optical power threshold and a difference between the i^{th} optical power threshold and the i^{th} optical power value; and
the p^{th} optical power difference is a sum of a difference between the (p+1)^{th} optical power value and the p^{th} optical power threshold and a difference between the p^{th} optical power threshold and the p^{th} optical power value; and
processing the optical signal based on the N-1 optical power thresholds.

11. The method according to claim 10, wherein
the difference between the (i+1)^{th} optical power value and the i^{th} optical power threshold is greater than the difference between the i^{th} optical power threshold and the i^{th} optical power value, and the (i+1)^{th} optical power value is greater than the i^{th} optical power value; and
the difference between the (p+1)^{th} optical power value and the p^{th} optical power threshold is greater than the difference between the p^{th} optical power threshold and the p^{th} optical power value, and the (p+1)^{th} optical power value is greater than the p^{th} optical power value.

12. The method according to claim 10 or 11, wherein
a ratio of the difference between the (i+1)^{th} optical power value and the i^{th} optical power threshold to a square root of the (i+1)^{th} optical power value is a first value, and a ratio of the difference between the i^{th} optical power value and the i^{th} optical power threshold to a square root of the i^{th} optical power value is the first value; and
a ratio of the difference between the (p+1)^{th} optical power value and the p^{th} optical power threshold to a square root of the (p+1)^{th} optical power value is the first value, and a ratio of the difference between the p^{th} optical power value and the p^{th} optical power threshold to a square root of the p^{th} optical power value is the first value.

13. A communication apparatus, comprising a processor, wherein the processor is configured to,
by executing a computer program or instructions or via a logic circuit,
cause the communication apparatus to perform the method according to any one of claims 1 to 12.

14. The communication apparatus according to claim 13, wherein the communication apparatus further comprises a memory, and the memory is configured to store the computer program or the instructions.

15. The communication apparatus according to claim 13 or 14, wherein the communication apparatus further comprises a communication interface, and the communication interface is configured to input a signal and/or output a signal.

16. A communication apparatus, comprising a logic circuit and an input/output interface, wherein
the input/output interface is configured to input a signal and/or output a signal; and
the logic circuit is configured to perform the method according to any one of claims 1 to 12.

17. A computer-readable storage medium, wherein the computer-readable storage medium stores a computer program or instructions, and when the computer program or the instructions are run on a computer,
the method according to any one of claims 1 to 12 is performed.

18. A computer program product, comprising instructions, wherein when the instructions are run on a computer, the method according to any one of claims 1 to 12 is performed.
